# EUROPÄISCHE PATENTANMELDUNG

(11) **EP 3 835 095 A1**
(43) Veröffentlichungstag der Anmeldung: **16.06.2021**
(21) Anmeldenummer: 20212816.1
(22) Anmeldetag: 09.12.2020
(51) Int. Cl.: B60G 3/16, B62K 25/04

(54) **VORDERRADAUFHÄNGUNG FÜR EIN MOTORRAD ODER TRIKE**

(30) Priorität: 10.12.2019 DE 102019133620
(71) Anmelder: Technische Hochschule Nuernberg Georg-Simon-Ohm, 90489 Nuernberg (DE)
(72) Erfinder: Bouchard, Dietmar, 90768 Fürth (DE); Schröter, Fabian, 90768 Fürth (DE)
(74) Vertreter: Louis Pöhlau Lohrentz

(57) **Zusammenfassung**

Die Erfindung schlägt eine Vorderradaufhängung (1) eines Motorrads oder Trikes mit einem Lenkholm (14) und einer Einarmschwinge zur Lagerung einer Drehachse (12) eines Vorderrads (11) vor, wobei das Vorderrad in einer Rotationsebene (E) rotierbar gelagert ist und die Einarmschwinge mindestens zwei Längsholme (21, 22) aufweist.

Um bei einer relativ geringen Masse der Vorderradaufhängung (1) ein sicheres Fahrverhalten auch bei hohen Bremskräften, bzw. hohen Geschwindigkeiten bereitzustellen, ist vorgesehen, dass die Einarmschwinge (2) eine definierte Steifigkeit besitzt, die derart ausgebildet ist, dass eine durch Aufstandskräfte und/oder Bremskräfte hervorgerufene Torsion der Drehachse (12) des Vorderrads (11) durch eine entgegengerichtete Torsion der Fachwerkschwinge (2) und/oder des Lenkholms (14) im Wesentlichen kompensiert wird, und so beim Bremsen ein Moment in der Lenkung verhindert wird.

## Beschreibung

Die Erfindung betrifft eine Radaufhängung eines einspurigen Fahrzeugs oder eines mehrspurigen Fahrzeugs mit einem gelenkten Vorderrad, insbesondere ein Trike, gemäß den Merkmalen des Oberbegriffs des Anspruchs 1, bzw. ein Verfahren zur Herstellung einer Radaufhängung eines einspurigen Fahrzeugs oder mehrspurigen Fahrzeugs gemäß den Merkmalen des Oberbegriffs des Anspruchs 9.

In der Praxis werden Vorderradaufhängungen mit Einarmschwingen nur für relativ leichte, bzw. langsame Krafträder verwendet. Solche Krafträder sind beispielsweise von der Firma Piaggio unter der Marke Vespa bekannt. Ein Nachteil von Vorderradaufhängungen mit Einarmschwingen für einspurige Fahrzeuge ist, dass bei entsprechend großen Kräften oder hohen Geschwindigkeiten das Vorderrad zu einer Torsion, vorzugsweise um seine Hochachse oder Längsachse neigt, welches instabile Fahrzustände zur Folge haben kann.

Das einzige bislang in Großserie gefertigte Motorrad mit einer Einarmschwinge und Achsschenkel-Lenkung war die Yamaha GTS1000. Es handelte sich hier um einen Sport-Tourer, dessen Vorderrad mit Einarmschwinge und Achsschenkel-Lenkung geführt wurde. Dieses Fahrzeugkonzept konnte sich jedoch am Markt nicht durchsetzen.

Eine Vorderradaufhängung für ein einspuriges Fahrzeug mittels Achsschenkel-Lenkung ist beispielsweise aus der US 5 361 864 B bekannt.

Das Dokument DE 101 20 479 A1 zeigt eine Vorderradaufhängung mittels einer Einarmschwinge an einer einarmig ausgebildeten Gabel.

Des Weiteren werden Achsschenkel-Lenkungen mit einer Einarmschwinge an der Vorderradaufhängung für zweispurige Fahrzeuge, beispielsweise für Motorradgespanne mit Seitenwagen, verwendet. Hier ist es notwendig, einen entsprechend großen Nachlaufwinkel vorzusehen, um ein sicheres Fahrverhalten zu erreichen. Aufgrund dieses entsprechend groß dimensionierten Nachlaufwinkels ist eine analoge Achsschenkel-Konstruktion für einspurige Motorräder in der Praxis nicht geeignet.

Der Erfindung liegt die Aufgabe zugrunde, eine Radaufhängung für einspurige Fahrzeuge zu schaffen, die eine geringe Masse aufweist und bei einfacher Herstellung auch für Räder mit größerem Durchmesser und/oder hohe Kräfte geeignet ist. Insbesondere soll eine Vorderradaufhängung mit einer Einarmschwinge geschaffen werden, die eine relativ geringe Masse aufweist und dennoch ein sicheres Fahrverhalten auch bei hohen Kräften, bzw. hohen Geschwindigkeiten, besitzt. Vorzugsweise soll die Radaufhängung an einem herkömmlichen Lenkkopf gelagert werden können, so dass sie für jeden klassischen Rahmen geeignet ist, also auch zur Nachrüstung.

Diese Aufgabe wird erfindungsgemäß durch eine Radaufhängung eines einspurigen Fahrzeugs oder mehrspurigen Fahrzeugs mit den Merkmalen des Anspruchs 1 und durch ein Verfahren zur Herstellung einer Radaufhängung eines einspurigen Fahrzeugs oder mehrspurigen Fahrzeugs mit den Merkmalen des Anspruchs 9 gelöst.

Erfindungsgemäß ist ein Verfahren zur Herstellung einer Radaufhängung, vorzugsweise Vorderradaufhängung, eines einspurigen Fahrzeugs, insbesondere eines Motorrads, vorgesehen, wobei die Radaufhängung einen Lenkholm und eine Einarmschwingung zur Lagerung einer Drehachse eines Rads, insbesondere Vorderrads, umfasst, wobei das Rad um seine Drehachse in einer Rotationsebene rotierbar gelagert ist, und wobei die Einarmschwinge mindestens zwei Längsholme aufweist, die derart untereinander verbunden werden, dass deren erste Enden im Bereich der Drehachse angeordnet und unmittelbar oder mittelbar miteinander verbunden sind, und deren zweite Enden im Bereich einer mittelbaren oder unmittelbaren Anbindung der Einarmschwinge an den Lenkholm angeordnet sind und deren zweite Enden unmittelbar oder mittelbar miteinander verbunden sind, und im Bereich des Lenkholms eine Gabel mit wenigstens einer Gabelbrücke zur Lagerung der Einarmschwinge vorgesehen ist. Wesentlich dabei ist, dass die Einarmschwinge mit einer definierten Steifigkeit derart ausgebildet wird, dass eine durch Aufstandskräfte und/oder Bremskräfte hervorgerufene Torsion und/oder Biegung der Drehachse durch eine entgegengerichtete Torsion und/oder Biegung der Einarmschwinge und/oder des Lenkholms und/oder der wenigstens einen Gabelbrücke im Wesentlichen kompensiert wird.

Erfindungsgemäß ist eine Radaufhängung eines einspurigen Fahrzeugs vorgesehen, insbesondere eine Vorderradaufhängung eines Motorrads oder eines Trikes, mit einem um eine Drehachse in einer Rotationsebene rotierbar gelagerten Rad, insbesondere Vorderrad, welches mittels einer Einarmschwinge mittelbar oder unmittelbar mit einem drehbar gelagerten Lenkholm verbunden ist. Wesentlich dabei ist, dass die Einarmschwinge als Fachwerkschwinge ausgebildet ist und mindestens zwei parallel oder schräg zu der Rotationsebene beabstandete Längsholme, bzw. quer zu der Drehachse beabstandete Längsholme, aufweist, deren erste Enden im Bereich der Drehachse angeordnet und miteinander verbunden sind, und deren zweite Enden im Bereich einer Anbindung der Einarmschwinge an den Lenkholm oder an einen Rahmen des Fahrzeugs angeordnet und miteinander verbunden sind, und die Einarmschwinge wenigstens eine die beiden Längsholme verbindende Querstrebe aufweist.

Wesentlich bei der Erfindung ist, dass die im dynamischen Fahrbetrieb an dem über die Einarmschwinge aufgehängten Rad des Motorrads auftretenden Verformungen durch Aufstandskräfte und/oder Bremskräfte durch gezielte Verformungen der Einarmschwinge und/oder des Lenkholms und/oder der Gabelbrücken kompensiert werden. Es hat sich gezeigt, dass die Ausgestaltung der Einarmschwinge als Fachwerkschwinge dafür ideal geeignet ist. Vorzugsweise wird die Steifigkeit der Einarmschwinge und/oder des Lenkholms und/oder der Gabelbrücken derart ausgelegt, dass aus einer Torsion der Drehachse des Rads eine in entgegengesetzte Richtung gerichtete Torsion der Einarmschwinge und/oder des Lenkholms resultiert.

Insbesondere ist es bei der Erfindung im Gegensatz zu den bekannten Lösungen nicht notwendig, die Vorderradaufhängung durch massive Bauteile derart auszulegen, dass eine Torsion der Drehachse alleine aufgrund der massiven Auslegung der Einarmschwinge verhindert wird. Eine massive Auslegung ist hinsichtlich des Gewichts sehr nachteilig, da dadurch die Masse der Radaufhängung deutlich vergrößert würde, was sich nachteilig auf das Fahrverhalten auswirkt.

Für die Auslegung der Einarmschwinge und/oder des Lenkholms und/oder der Gabelbrücken kann der Fachmann insbesondere die Lehre der Elastokinematik verwenden. Unter dem Begriff Elastokinematik versteht man die sorgfältige Abstimmung der Federraten aller beteiligten elastischen Bauelemente oder Lager und der räumlichen Anordnung der Achslenker sowie der Elastizitäten der Achslenker und der betroffenen Fahrgestellpartien aufeinander mit dem Ziel, die durch die Elastizitäten entstehenden und unvermeidlichen Verformungen unter äußerer Belastung zu kompensieren oder sogar in wünschenswerte Bewegungen umzuwandeln. Insbesondere kann die Elastizität oder die Steifigkeit der Fachwerkschwinge unter Anwendung von Elastokinematik festgelegt oder berechnet werden.

Insbesondere kann vorgesehen sein, dass die Fachwerkschwinge und/oder der Lenkholm und/oder die Gabelbrücken derart ausgebildet ist, bzw. sind, dass eine durch Aufstandskräfte und/oder Bremskräfte hervorgerufene Torsion der Drehachse durch eine entgegengerichtete Torsion der Fachwerkschwinge und/oder des Lenkholms und/oder der Gabelbrücken im Wesentlichen kompensiert wird. Für die Auslegung der Fachwerkschwinge oder des Lenkholms kann der Fachmann die Prinzipien der Elastokinematik anwenden, um zu der gewünschten Kompensation zu gelangen.

Entsprechend kann in einer Ausgestaltung vorgesehen sein, dass die Fachwerkschwinge und/oder der Lenkholm derart ausgebildet ist, bzw. sind, dass durch eine entgegengerichtete Torsion der Fachwerkschwinge und/oder des Lenkholms und/oder der Gabelbrücken in Folge einer von Aufstandskräften und/oder von Bremskräften hervorgerufenen Torsion der Drehachse eine im Wesentlichen lineare Translation der Drehachse innerhalb der Rotationsebene erfolgt.

In einer Ausgestaltung kann vorgesehen sein, dass die Einarmschwinge als Fachwerkschwinge ausgebildet wird, indem wenigstens eine Querstrebe mit den beiden Längsholmen kraftschlüssig, formschlüssig, vorzugsweise einstückig und/oder stoffschlüssig verbunden wird.

Insbesondere wird unter Fachwerkschwinge eine Schwinge verstanden, deren Längsholme mittels wenigstens einer Querstrebe verbunden sind, wobei die Zwischenräume zwischen der wenigstens einen Querstrebe und den Längsholmen frei von Material, vorzugsweise frei von tragendem Material, sind. Die Zwischenräume der Fachwerkschwinge können dabei selbstverständlich aus optischen Gründen durch kaschierende Materialien abgedeckt bzw. verschlossen werden, um eine einheitliche oder durchgehende Oberfläche zu bilden oder das Innere der Einarmschwinge gegen Eindringen von Schmutz oder Fremdkörpern zu schützen. Das kaschierende Material ist dabei vorzugsweise so gewählt, dass dieses die Steifigkeit der Fachwerkschwinge möglichst wenig beeinflusst.

Es kann vorgesehen sein, dass die Elastizität oder die Steifigkeit der Einarmschwinge derart ausgebildet wird, dass infolge einer durch eine entgegengerichtete Torsion der Fachwerkschwinge und/oder des Lenkholms aufgrund einer von Aufstandskräften und/oder von Bremskräften hervorgerufenen Torsion der Drehachse eine im Wesentlichen lineare Translation der Drehachse innerhalb der Rotationsebene resultiert.

In einer Ausgestaltung kann vorgesehen sein, dass die Elastizität oder die Steifigkeit der Fachwerkschwinge gezielt festgelegt wird, indem die beiden Längsholme durch eine Querstrebe miteinander derart verbunden werden, dass die Querstrebe im Bereich des ersten Endes mit einem der Längsholme verbunden wird, und mit dem anderen Längsholm im Bereich des zweiten Endes verbunden wird.

Insbesondere kann vorgesehen sein, dass die Querstrebe zwischen den beiden Längsholmen außerzentrisch verläuft. Vorzugsweise kann auch vorgesehen sein, dass die Querstrebe zwischen den beiden Längsholmen außerzentrisch verläuft, vorzugsweise indem die Querstrebe wenigstens zwei Teilstreben aufweist, die in einem außerzentrischen Schnittpunkt miteinander verbunden sind. Durch den außerzentrischen Verlauf der Querstrebe kann die Fachwerkschwinge eine Torsion der Drehachse des Rads besonders gut kompensieren.

Vorzugsweise wird unter außerzentrisch außerhalb eines geometrischen Mittelpunktes oder außerhalb eines Flächenmittelpunktes oder außerhalb eines Schwerpunktes oder außerhalb eines Kraftmittelpunktes einer durch die Längsholme definierten Fläche verstanden. Außerzentrisch verlaufend heißt somit, dass die Querstrebe nicht durch den geometrischen Mittelpunkt oder nicht durch den Flächenmittelpunkt oder nicht durch den Schwerpunkt oder nicht durch den Kraftmittelpunkt einer durch die Längsholme definierten Fläche verläuft.

In einer Ausgestaltung kann vorgesehen sein, dass die Querstrebe wenigstens zwei Teilstreben aufweist, die in einem außerzentrisch angeordneten Schnittpunkt miteinander verbunden sind.

Vorzugsweise kann vorgesehen sein, dass die Querstrebe eine dritte Teilstrebe aufweist, die von dem ersten Ende oder dem zweiten Ende eines Längsholms zu dem außerzentrischen Schnittpunkt verläuft und dort mit den anderen Teilstreben der Querstrebe verbunden ist.

Dabei kann vorgesehen sein, dass der außerzentrische Schnittpunkt innerhalb einer durch die beiden Längsholme definierten Ebene liegt.

Vorzugsweise können mehrere Querstreben vorgesehen sein, die vertikal übereinander angeordnet sind. Beispielsweise kann dabei vorgesehen sein, dass der außerzentrische Schnittpunkt zumindest einer der Querstreben oberhalb oder unterhalb einer durch die beiden Längsholme definierten Ebene liegt. Durch die zwei übereinander angeordneten Querstreben ist es möglich, die Steifigkeit der Fachwerkschwinge besonders gut einzustellen um eine möglichst vollständige Kompensation einer Torsion der Drehachse des Rads zu erhalten.

Es kann vorgesehen sein, dass wenigstens zwei die beiden Längsholme verbindende Querstreben derart vorgesehen sind, dass die wenigstens zwei Querstreben jeweils zwei sich in jeweils einem außerzentrischen Schnittpunkt schneidende Teilstreben aufweisen und die beiden außerzentrischen Schnittpunkte vertikal zueinander beabstandet sind. Insbesondere ist dabei vorgesehen, dass die vertikal zueinander beanstandeten Querstreben außer den Berührungspunkten mit den Längsholmen keine weiteren gemeinsamen Berührungspunkte aufweisen.

Insbesondere kann vorgesehen sein, dass die Fachwerkschwinge als geschobene Schwinge ausgebildet ist.

In einer Ausgestaltung kann vorgesehen sein, dass das Rad ein Bremssystem, vorzugsweise mit mindestens einer Bremsscheibe mit einem Bremssattel aufweist und der Bremssattel über eine separate Stützstrebe an dem Lenkholm abgestützt ist. Durch die separate Abstützung des Bremssattels können Nickbewegungen beim Bremsen verringert werden.

Eine Anwendung der Erfindung ist insbesondere auch für größere Räder vorgesehen, wobei vorzugsweise ein Rad vorgesehen ist, das eine Felge mit einem Durchmesser von mindestens 14 Zoll oder 15 Zoll aufweist. Als ein Vorteil hat sich dabei erwiesen, dass durch die erfindungsgemäße Ausgestaltung der Radaufhängung die Masse der Radaufhängung relativ gering ist. In der Praxis konnten Ausgestaltungen erzielt werden, bei denen die Gesamtmasse der Vorderradaufhängung für ein Motorrad kleiner als 9 kg beträgt und die gefederte Masse (bestehend aus Holm und Gabelbrücken) kleiner als 6 kg ist.

Eine Anwendung der Erfindung kann beispielsweise bei einem Motorrad erfolgen, welches eine Vorderradaufhängung nach einem der vorstehend beschriebenen Beispiele aufweist, wobei ein Lenker mit dem drehbaren Lenkholm verbunden ist.

Insbesondere kann vorgesehen sein, dass der Lenkholm kraftschlüssig, formschlüssig oder stoffschlüssig mit der unteren Gabelbrücke und/oder mit einer oberen Gabelbrücke, verbunden ist, vorzugsweise, dass der Lenkholm mit der oberen Gabelbrücke verdrehbar oder drehbar verbunden ist.

Weitere Ausgestaltungen der Erfindung sind in den Figuren gezeigt und nachfolgend beschrieben. Dabei zeigen:
- Fig. 1a bis 1e:: die Problematik durch Aufstandskräfte bei einseitigen Radaufhängungen;
- Fig. 2a bis 2d:: die Problematik durch Bremskräfte bei einseitigen Radaufhängungen;
- Fig. 3a bis 3d:: eine schematische Darstellung einer ersten erfindungsgemäßen Ausgestaltung einer Fachwerkschwinge und ihrer Verformungen;
- Fig. 4a bis 4h:: eine schematische Darstellung einer abgewandelten Ausführung einer Fachwerkschwinge und ihrer Verformungen;
- Fig. 5a bis 5d:: eine schematische Darstellung der Verformungen der Schwinge und ihrer Kompensation;
- Fig. 6a bis 6d:: eine schematische Darstellung der Verformungen der Schwinge und ihrer Kompensation mit zusätzlichen Querstreben;
- Fig. 7a bis 7b:: eine schematische Darstellung der Schwinge in Seitenansicht und ihrer Verformung zur Kompensation der Aufstandskräfte;
- Fig. 8a bis 8b:: die Fachwerkschwinge in Draufsicht und in Seitenansicht;

- Fig. 9:: ein schematisches CAD-Modell einer erfindungsgemäßen Radaufhängung;
- Fig. 10a bis 10b:: eine schematische Darstellung eines Bremsvorgangs der erfindungsgemäßen Radaufhängung im CAD-Modell;
- Fig. 11a bis 1 1 d:: Darstellungen möglicher Varianten der Schwinge mit drei Längsholmen.

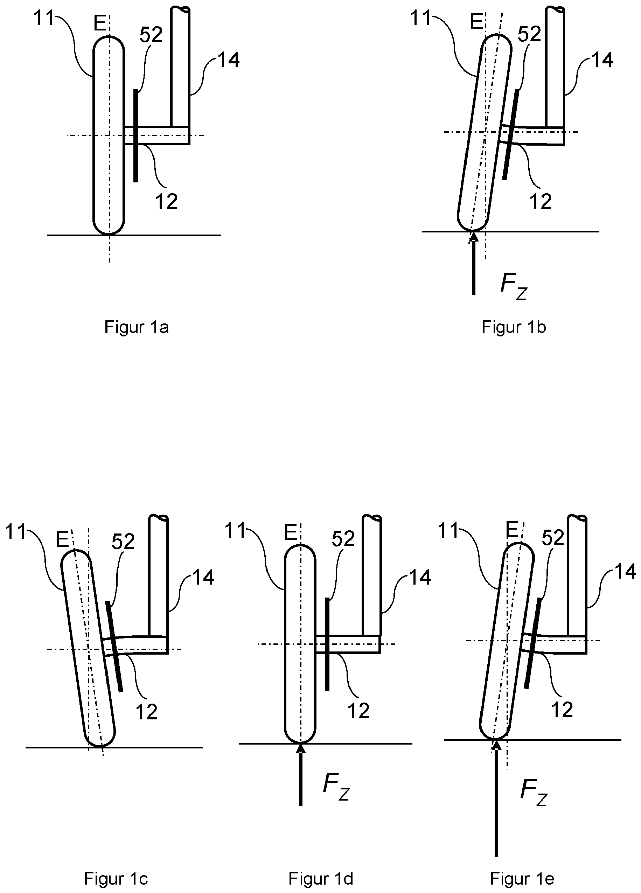

Die Figuren 1 bis 11d zeigen unterschiedliche Beispiele möglicher Ausgestaltungen der erfindungsgemäßen Lösung. Für gleiche oder gleichartige Teile wurden dabei jeweils dieselben Referenzzeichen verwendet. Diese figürlichen Darstellungen stellen Beispiele dar und sollen nicht einschränkend verstanden werden. Für den Fachmann ist klar, dass er die gezeigten Ausgestaltungen anhand seines handwerklichen Könnens bei Bedarf abändern oder untereinander kombinieren kann, ohne dabei den Rahmen der Erfindung zu verlassen.

In den Figuren 1a bis 1e ist skizziert, welches Problem bei einem Motorrad durch eine einseitige Achsaufhängung entstehen kann. Die Figuren 1a und 1b zeigen ein Vorderrad 11, welches in einer Rotationsebene E in seiner Drehachse 12 rotierend einseitig an einem nicht dargestellten Motorrad aufgehängt ist. Die Figur 1a zeigt das Rad 11 ohne Vorbelastung, also ohne eine Torsion, in der Idealstellung. In der Praxis wird das Rad 11 mit der Kraft *Fz* belastet. Aufgrund der Kraft *Fz,* die beispielsweise aus den statischen und dynamischen Aufstandskräften resultiert, erfolgt eine Torsion der Drehachse 12 des Rads 11. Dies ist in der Figur 1b verdeutlicht. Das bedeutet, bereits in der normalen Ruhelage des Motorrads würde das Rad 11 mit seiner Rotationsebene E schief stehen, obwohl sich das Motorrad nicht in Schräglage befindet. Als Resultat würde das Motorrad eine unfreiwillige Kurve fahren. Ein Geradeaus-Lauf ist so nicht oder nur unter erschwerten Bedingungen möglich. Wird durch eine Vorverformung bei der Fertigung eine Gegentorsion erreicht, wie in Figur 1c dargestellt, steht das Rad bei statischer Radlast *Fz* senkrecht, wie in Figur 1d dargestellt. Kommt zu der Kraft *Fz* noch ein dynamischer Anteil hinzu, wie in Figur 1e zu sehen, tritt dieser Nachteil wieder auf.

Die Kraft *Fz* wird aus der statischen Radlast und zusätzlich einem dynamischen Anteil bestehen. Das bedeutet, in der Praxis ist die Kraft *F_{z}* nicht konstant, sondern variiert besonders beim Bremsen sehr stark, was zur Folge hat, dass sich die Torsion der Drehachse 12, bzw. die Neigung des Rads 11, im dynamischen Fahrbetrieb laufend ändert, was die Fahrstabilität zusätzlich negativ beeinflusst. Durch das damit verbundene seitliche Verschieben des Radaufstandspunkts erzeugen die damit auch seitlich verschobenen Bremskräfte ein seitliches Ziehen in der Lenkung.

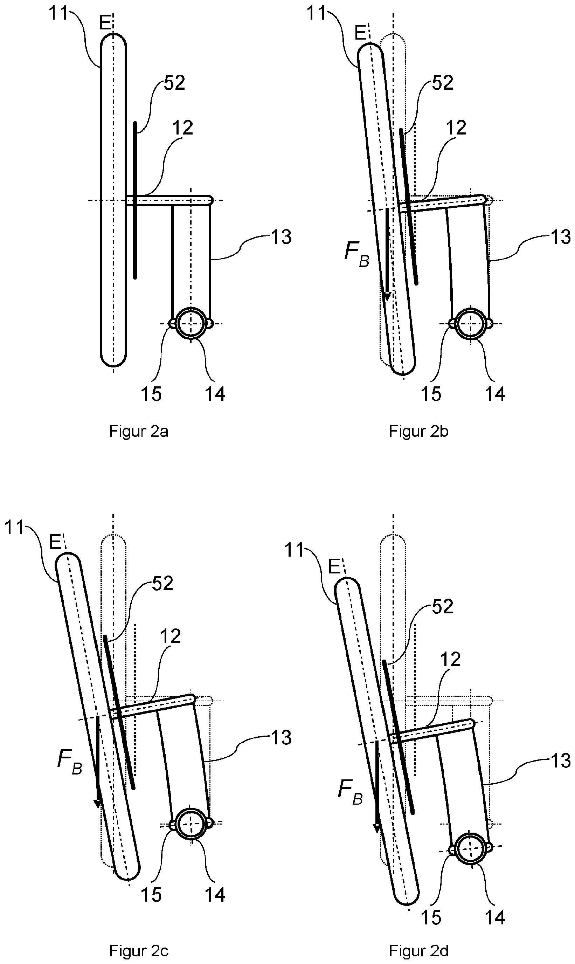

In den Figuren 2a bis 2c ist eine schematische Darstellung einer zusätzlichen Problematik einer einseitigen Radaufhängung eines Motorrads im Falle eines Bremsvorgangs skizziert.

Die Figur 2a zeigt das Rad 11 in einer unverformten Ausgangslage. Das Rad 11 rotiert innerhalb der Rotationsebene E und ist mit seiner Drehachse 12 an einer Einarmschwinge 13 gehalten. Die Einarmschwinge 13 ist über einen Lenkholm 14 drehbar über zwei Gabelbrücken 16, 17 an einem nicht dargestellten Rahmen eines Motorrads angelenkt. Wie in Figur 2b dargestellt ist, greift die durch den Pfeil dargestellte Bremskraft mittig am Rad an. Dadurch entsteht ein Moment, welches infolge der einseitigen Radaufhängung zu einer Biegung der Schwinge und damit zu einer Drehung des Rads führt. Diese Drehung ist in der Figur 2b zu erkennen. Dazu kommt es zu einer Torsion des seitlichen Lenkholms und damit zu einer Verstärkung der Drehung des Rads, wie in Figur 2c dargestellt. Für die Fahreigenschaften eines Motorrads ist dieses Verhalten äußerst ungünstig, da dieses Motorrad beim Bremsen entsprechend nach links ziehen würde.

In einer alternativen Ausgestaltung, die nicht in den Figuren dargestellt ist kann eine Montage des Holms auf der linken Fahrzeugseite erfolgen. Hier würde das Motorrad dementsprechend nach rechts ziehen. Im Falle einer Gefahrensituation könnte dies zu einer für den Fahrer sehr gefährlichen Situation führen. Aufgrund der Elastizität des Lenkholms 14 biegt sich beim Bremsen das Rad 11 noch zusätzlich nach hinten, wie in der Figur 2d dargestellt ist. Dadurch ändert sich der Nachlauf des Rads 11. Dieser Effekt könnte zwar beispielsweise durch die Verwendung einer größeren Wandstärke für den Lenkholm 14 reduziert werden, kann aber auch bei symmetrischen Radaufhängungen im gleichen Maße auftreten.

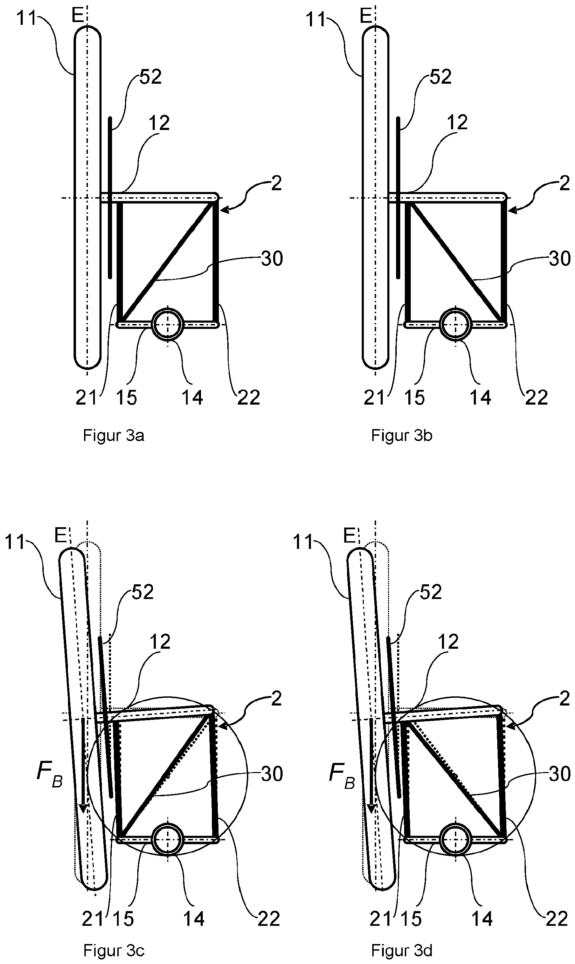

In den Figuren 3a und 3b ist eine Ausgestaltung der erfindungsgemäßen Radaufhängung 1 skizziert. Das Rad 11 ist über seine Drehachse 12 in der Rotationsebene E drehbar gelagert. Das Rad 11 ist über eine Fachwerkschwinge 2 einseitig aufgehängt. Die Fachwerkschwinge 2 ist über einen Lenkholm 14 durch Gabelbrücken mit dem nicht dargestellten Rahmen eines Motorrads drehbar verbunden.

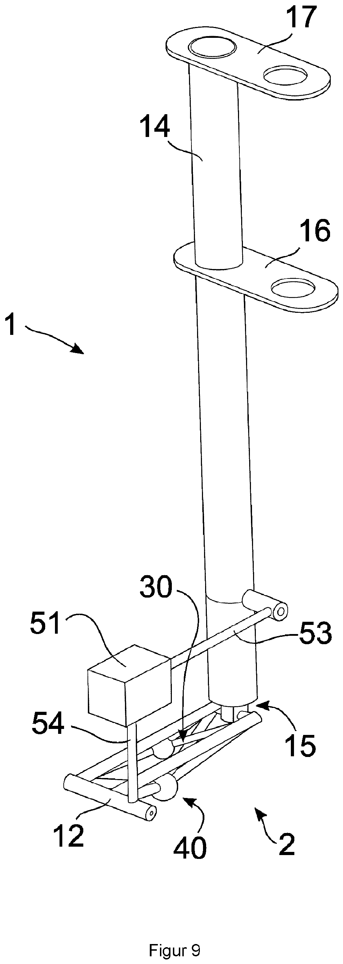

Die Fachwerkschwinge 2 weist zwei parallel zueinander verlaufende Längsholme 21 und 22 auf. Die beiden Längsholme 21 und 22 sind an ihrem einen Ende im Bereich der Drehachse 12 mit einem Träger verbunden, an dem die Drehachse 12 gelagert ist. Im Bereich ihres gegenüberliegenden Endes sind die beiden Längsholme 21 und 22 an dem Lenkholm 14 angelenkt. Dazu ist, wie in der Figur 9 zu entnehmen ist, im Bereich dieses Endes der beiden Längsholme 21 und 22 eine Lenkholmanbindung 15 vorgesehen.

Ferner weist die Fachwerkschwinge 2 eine Querstrebe 30 auf, welche die beiden Längsholme 21 und 22 miteinander verbindet. In der Figur 3a ist die Querstrebe 30 von links nach rechts geneigt ausgeführt.

Die Figur 3b zeigt im Prinzip dieselbe Ausführung der Radaufhängung 1 wie die Figur 3a, nur dass hier als einziger Unterschied die Querstrebe 30 von rechts nach links verlaufend ausgeführt ist. Abhängig von der Ausführung der Querstrebe 30 kann der Versatz y variieren. Der mit der Konstruktion betraute Fachmann wird je nach Anforderung an die Vorderradaufhängung eine an die Gegebenheit angepasste Querstrebe 30 wählen.

Bei einer Verformung der Fachwerkschwinge 2 in Folge der Bremskraft wandern die Eckpunkte eines durch die Längsholme 21, bzw. 22, und der Querstrebe 30 in den Eckpunkten gebildeten Dreiecks oder Pyramide entlang eines Kreises. Das heißt, dass auch nach dem Verdrehen der Fachwerkschwinge 2 infolge der Bremskraft die Eckpunkte der Fachwerkschwinge 2 immer auf einem Kreis bleiben, wie in den Figuren 3c und 3d dargestellt ist. Der Kreis durch die Eckpunkte der Fachwerkschwinge 2 steht für eine horizontale Bewegung dieser Eckpunkte. Das bedeutet, da hier kein wesentlicher Unterschied zwischen unbelastetem und belastetem Rad 11 auftritt, erfolgt hier keine Torsion in Fahrzeugrichtung durch die Pyramide, da diese lediglich bei einer Verformung mitwandert.

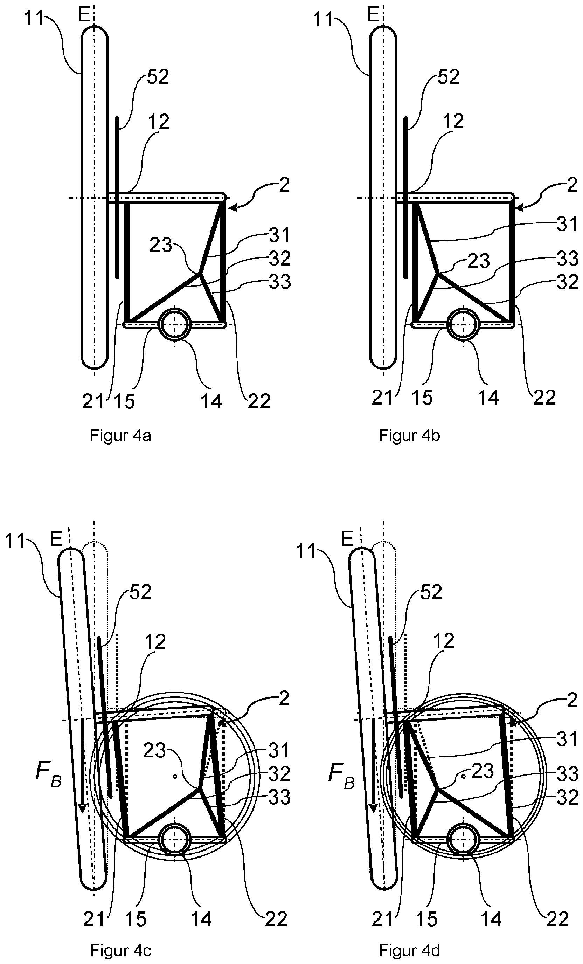

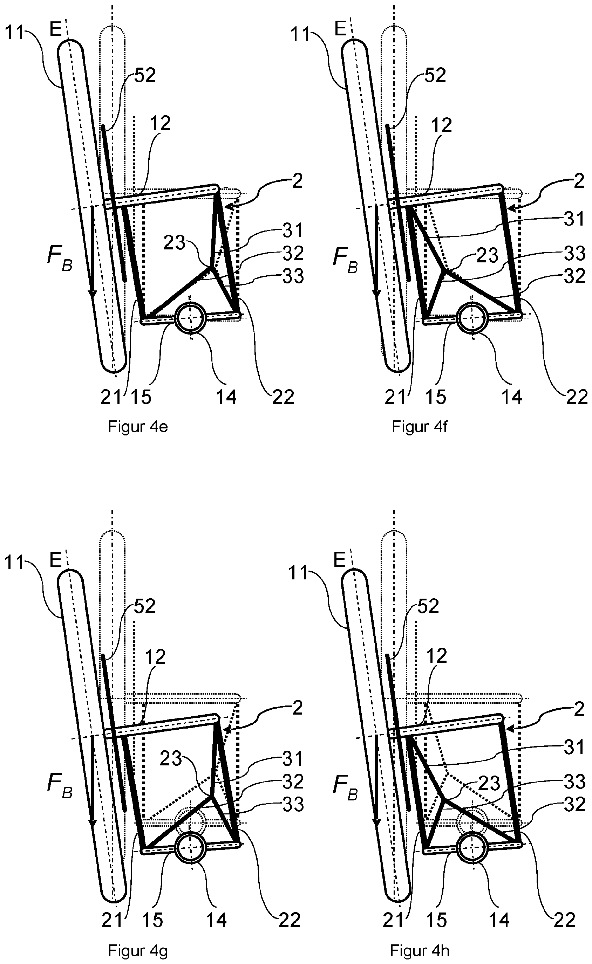

In den Figuren 4a und 4b ist eine gegenüber den Figuren 3a und 3b abgewandelte Ausgestaltung der Fachwerkschwinge 2 gezeigt. In der Figur 4a ist wiederum eine Querstrebe 30 vorgesehen, die von links nach rechts verlaufend angeordnet ist. Entsprechend ist die Querstrebe 30 der Figur 4b von rechts nach links verlaufend angeordnet.

Im Unterschied zu der Ausgestaltung gemäß den Figuren 3a und 3b ist die Querstrebe 30 gemäß der Ausgestaltung in den Figuren 4a und 4b aus mehreren Teilstreben aufgebaut. Die Querstrebe 30 weist drei Teilstreben 31, 32 und 33 auf. Diese drei Teilstreben 31, 32, 33 sind in einem Schnittpunkt 23 untereinander kraftschlüssig, formschlüssig und/oder stoffschlüssig verbunden (beispielsweise verschweißt). Das andere Ende der Teilstreben 31, 32, 33 ist jeweils mit einem der Längsholme 21, bzw. 22, verbunden. Wesentlich bei dieser Ausgestaltung ist, dass der Schnittpunkt 23 der Teilstreben 31, 32, 33 außerzentrisch verläuft. Das heißt, der Schnittpunkt 23 liegt außerhalb des Zentrums einer durch die beiden Längsholme 21 und 22 gebildeten Fläche. Durch diesen außerzentrischen Verlauf der Querstrebe 30 kann in der Fachwerkschwinge 2 durch (in den Figuren 4c und 4d nicht dargestellte) zusätzliche Querstreben entlang der Kanten einer gedachten Pyramide unterhalb der Längsträger 21 und 22 eine gezielte Torsion ausgelöst werden. Das bedeutet, im Gegensatz zu der Ausgestaltung der Figuren 3a und 3b besitzen die Eckpunkte der Fachwerkschwinge 2 bei einer Verformung nun nicht mehr den gleichen Abstand zu einer gedachten Pyramidenspitze, wie in den Figuren 4c und 4d dargestellt ist. Das heißt, durch diese Konfiguration wandert beispielsweise der in den Figuren 4a und 4b dargestellte obere linke Knoten nach außen und somit nach unten. Umgekehrt gilt dies auch für den oberen rechten Knoten. Dieser wandert nach innen und muss so infolge der räumlichen Anordnung nach oben kippen. Diese Relativbewegung geschieht aufgrund der Bedingung, dass die Längsholme 21 und 22 und die Teilstreben 31, 32, 33 sich nicht längen, weil diese beim Bremsen weitgehend kraftfrei bleiben. Als Resultat dieser Ausgestaltung steht die Drehachse 12 beim Bremsen rechts höher und links niedriger. Das Ergebnis ist somit eine nach unten gerichtete Achse, wodurch eine durch Vergrößerung der Aufstandskräfte hervorgerufene Torsion der Drehachse 12 ausgeglichen werden kann.

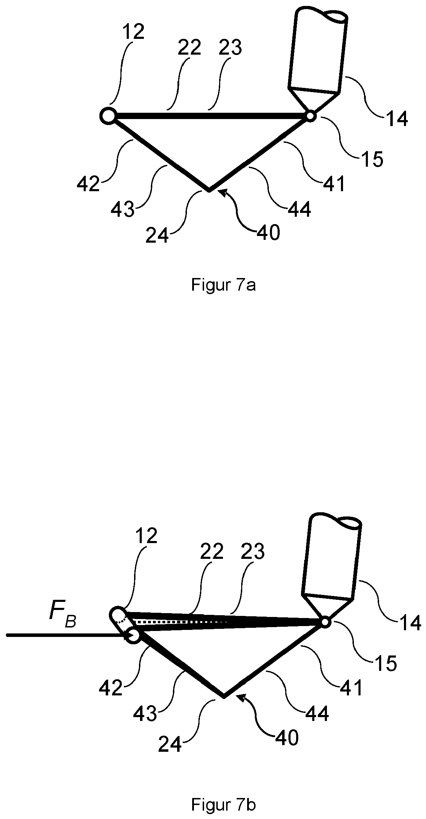

Die Figur 7a zeigt die unbelastete Schwinge mit den zusätzlich in Pyramidenform angebrachten Querstreben 41, 42, 43, 44 in der Seitenansicht. Figur 7b zeigt die Torsions-Verformung der durch die Bremskraft *F_{B}* in Längsrichtung belasteten Schwinge.

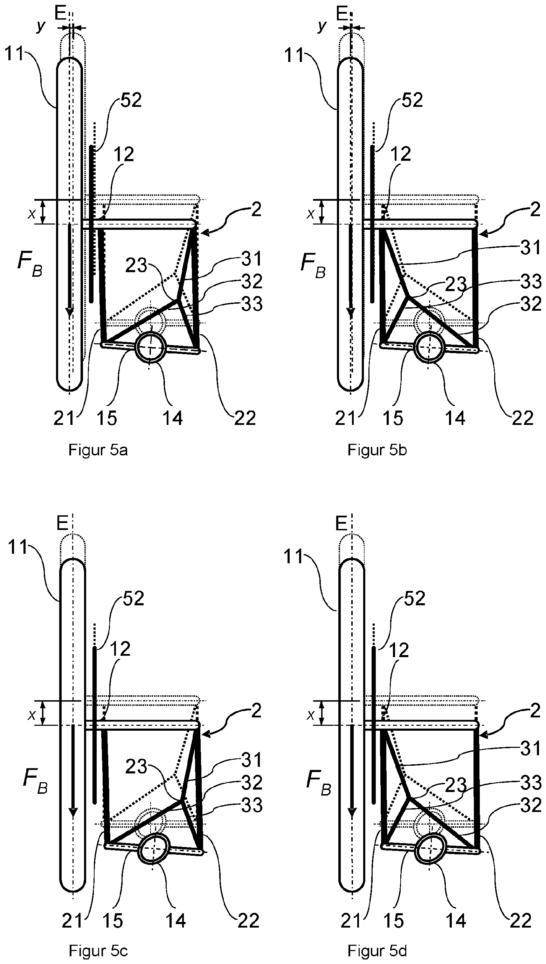

In den Figuren 5a und 5b ist die Verformung der beiden Versionen der Schwinge mit einer Kompensation der Torsion des Rads durch eine Gegentorsion des Lenkholms dargestellt. Erkennbar ist neben der Verschiebung x nach hinten (durch den Doppelpfeil gekennzeichnet) auch ein seitlicher Versatz y (ebenfalls durch einen Doppelpfeil gekennzeichnet), der mit der Bremskraft *F_{B}* zu einem Moment in der Lenkung führt, das der Fahrer ausgleichen muss.

Die Figuren 5c und 5d zeigen die Radaufhängungen ohne einen seitlichen Versatz des Vorderrads, weil dieser durch den elliptischen Querschnitt des Lenkholms, der zur Seite verbiegt, kompensiert wird, weil der elliptische Lenkholm eine anisotrope Biegesteifigkeit aufweist.

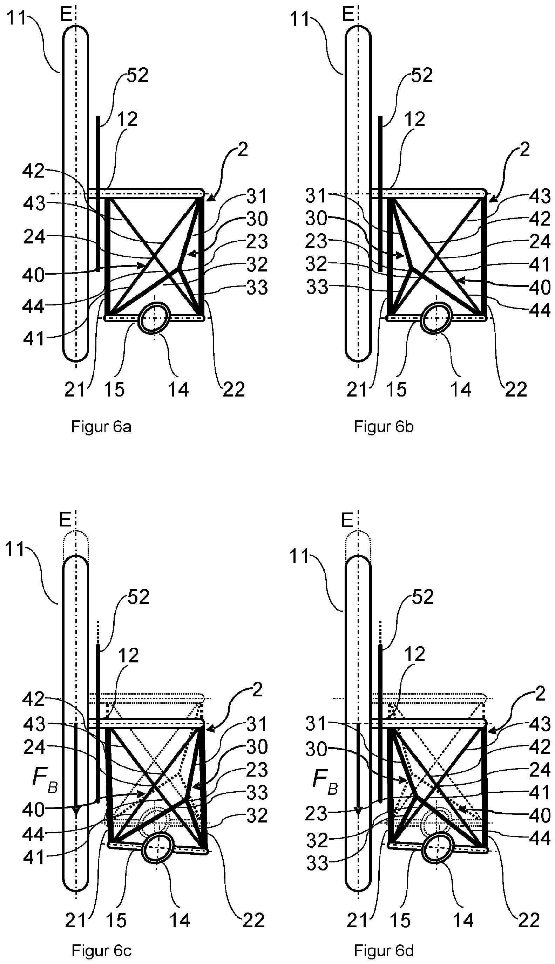

Figur 6a und 6b zeigen die Schwinge mit der zusätzlichen Querstrebe, bestehend aus 4 Stäben, angeordnet in Form einer Pyramide mit einem Eckpunkt mittig unter dem ebenen Fachwerk zur Torsionsversteifung, wie weiter oben beschrieben. In den Figuren 6c und 6d ist zusätzlich die oben beschriebene Verformung der Aufhängung zu erkennen, die aus der Bremskraft resultiert.

In den Figuren 5a und 5b ist dargestellt, wie die Torsion der Achse aufgrund der Verformung des Fachwerks kompensiert werden kann, indem der Lenkholm am unteren Ende nach rechts tordiert. Bei beiden Fachwerken bleibt jedoch ein seitlicher Versatz des Vorderrads zu erkennen, was beim Bremsen zu einem Ziehen in der Lenkung führt. Die Figuren 5c und 5d zeigen, wie durch eine schiefe Biegung eines elliptischen Lenkholms dieser seitliche Versatz ausgeglichen werden kann.

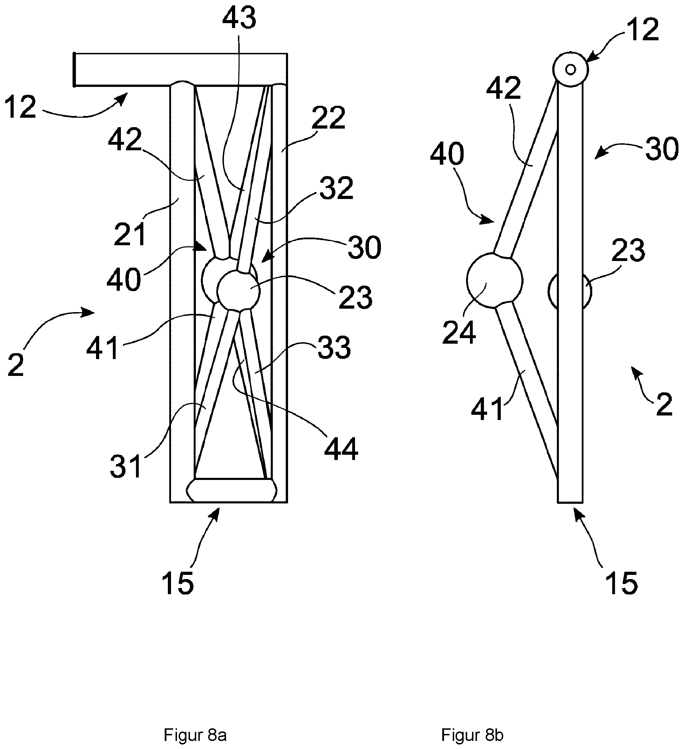

In den Figuren 8a und 8b ist eine weitere Ausgestaltung der Fachwerkschwinge 2 in vergrößerter Darstellung aus einem FEM-Modell gezeigt. Die Fachwerkschwinge 2 weist wiederum zwei Längsholme 21 und 22 auf, die durch eine Querstrebe 30 verbunden sind. In der Figur 8a ist die Fachwerkschwinge in Draufsicht gezeigt. Die Figur 8b skizziert die Fachwerkschwinge 2 in einer Seitendarstellung.

Die Querstrebe 30 weist wie in dem vorhergehenden Beispiel drei Teilstreben 31, 32 und 33 auf. Diese Teilstreben 31, 32, 33 sind in ihrem gemeinsamen Schnittpunkt 23 miteinander kraftschlüssig, formschlüssig oder stoffschlüssig verbunden. An ihren dem Schnittpunkt 23 gegenüberliegenden Enden sind die Teilstreben 31, 32, 33 jeweils mit einem der beiden parallel zueinander verlaufenden Längsholme 21 und 22 verbunden. Der Schnittpunkt 23 der Querstrebe 30 verläuft, wie in der Darstellung der Figur 5a zu sehen ist, außerzentrisch, d.h. außerhalb des Flächenmittelpunktes der durch die parallelen Längsholme 21 und 22 gebildeten Fläche.

Zusätzlich zu der Querstrebe 30 weist die Fachwerkschwinge 2 eine weitere Querstrebe 40 auf. Diese Querstrebe 40 weist vier Teilstreben 41, 42, 43 und 44 auf. Diese Teilstreben 41, 42, 43, 44 sind wiederum an einem gemeinsamen Schnittpunkt 24 untereinander verbunden. Mit ihren dem Schnittpunkt 24 jeweils gegenüberliegenden Enden sind diese Teilstreben 41, 42, 43, 44 jeweils mit einem der beiden Längsholme 21 und 22 verbunden. Der Schnittpunkt 24 dieser Querstrebe 40 verläuft zentrisch, wie der Darstellung den Figuren 6a und 6b oder 8a und 8b zu entnehmen ist. Der Schnittpunkt 24 liegt unterhalb, bzw. oberhalb einer durch die beiden Längsholme 21 und 22 definierten Ebene der Fachwerkschwinge. Der Schnittpunkt 23 der Querstrebe 30 liegt innerhalb dieser Ebene. Das bedeutet, dass die in den Figuren 6a und 6b oder 8a und 8b dargestellte Fachwerkschwinge 2 Querstreben 40 aufweist, die eine dreidimensionale Pyramide ausbilden. Durch diese Ausgestaltung ist eine Kompensation der Torsion der Drehachse 12 durch eine entgegengerichtete Verformung der Fachwerkschwinge 2 möglich, wie in Figur 7b zu erkennen.

In der Darstellung der Figuren 8a und 8b sind die Schnittpunkte 23, bzw. 24, jeweils als Kugeln dargestellt. Dies erfolgt lediglich deswegen, weil es sich bei diesen Darstellungen um CAD-Modelle handelt, bei denen die Kugeln ein für die CAD- und FEM-Analyse starres Objekt darstellen sollen. In der Praxis sind die Schnittpunkte 23 und 24 als kraftschlüssige, formschlüssige, bzw. stoffschlüssige Verbindungen der Querstreben untereinander ausgebildet und müssen nicht kugelförmig sein.

In der Figur 9 ist die Radaufhängung 1 bzw. die Vorderradaufhängung 1 beispielhaft als komplette Baugruppe dargestellt. Die Vorderradaufhängung 1 umfasst einen Lenkholm 14 mit zwei Gabelbrücken 16 und 17. Diese sind an einem nicht dargestellten Rahmen eines nicht dargestellten Motorrads drehbar gelagert und mit einer nicht dargestellten Lenkvorrichtung des Motorrads verbunden. An der Unterseite des Lenkholms 14 ist eine Fachwerkschwinge 2 gemäß dem in den Figuren 8a und 8b dargestellten Ausführungsbeispiel angeordnet.

Die Fachwerkschwinge 2 ist mit ihrem einen Ende über eine Lenkholmanbindung 15 mit dem Lenkholm 14 verbunden. An ihrem anderen Ende weist die Fachwerkschwinge 2 ein Lager für die Drehachse 12 eines Vorderrads 11 auf. Ferner ist an dem Lenkholm 14 ein Bremssattel 51 angeordnet, der über eine separate Stützstrebe 53, die in etwa parallel zu einem Längsholm 21, bzw. 22 der Fachwerkschwinge 2 geführt ist, an dem Lenkholm 14 abgestützt ist. Eine zweite Stützstrebe 54 verbindet den Bremssattel 51 mit der Fachwerkschwinge 2. Durch die separate Abstützung des Bremssattels 51 an dem Lenkholm 14 über die separate Stützstrebe 53 kann das Nickverhalten der Vorderradaufhängung 1 beim Bremsen besser eingestellt, bzw. kompensiert werden.

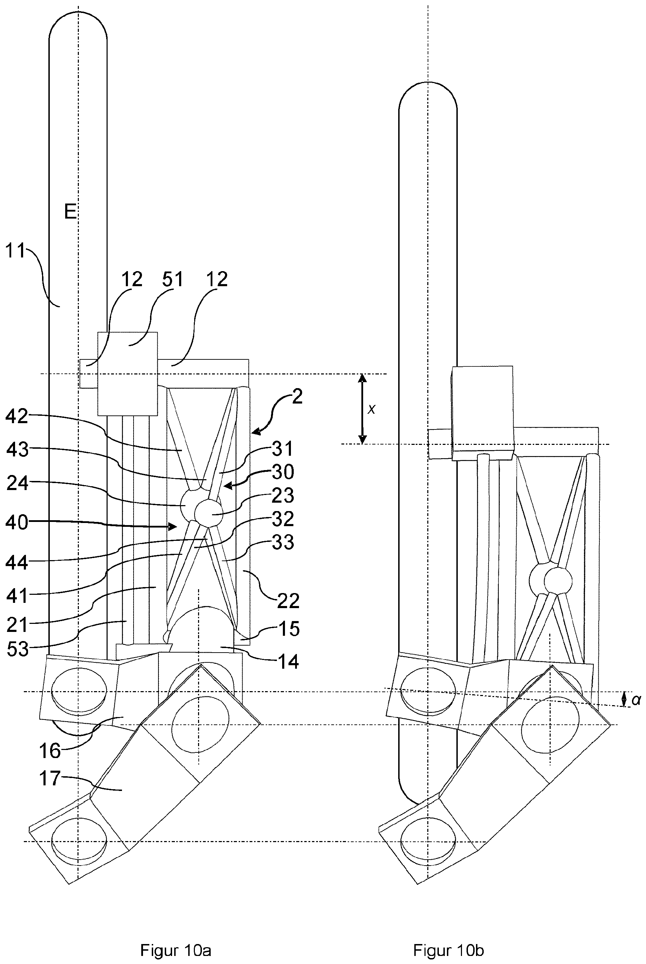

In den Figuren 10a und 10b ist eine schematische Darstellung der Vorderradaufhängung 1 gemäß der Ausgestaltung der Figur 9 im Betrieb gezeigt.

Die Figur 10a entspricht der Vorderradaufhängung 1, ohne eine Belastung. Die Darstellung der Figur 10b entspricht der Darstellung der Vorderradaufhängung 1 bei einem dynamischen Bremsvorgang. Wie aus dem mit dem Doppelpfeil dargestellten Versatz x der Drehachse 12 des Vorderrads 11 zu entnehmen ist, erfolgt bei einem Bremsvorgang lediglich ein Versatz des Vorderrads 11 innerhalb der Rotationsebene E, ohne dass dabei eine Torsion der Drehachse 12 resultiert. Das bedeutet, dass die Vorderradaufhängung gemäß der Fachwerkschwinge 2 auch bei einem dynamischen Bremsvorgang ein Verkippen des Rads 11 verhindert und damit den Geradeaus-Lauf eines Motorrads sicherstellt.

Da es sich bei den Torsionsvorgängen um lineare und reversible Verformungen handelt, ist dieser Effekt unabhängig von der Stärke der Bremskraft, da sich sowohl die aufgrund der Bremskraft hervorgerufene Torsion wie auch die aufgrund der Verformung der Fachwerkschwinge 2 und/oder des Lenkholms 14 hervorgerufene Gegentorsion linear verhalten und damit entsprechend kompensieren.

Wie aus der Darstellung der Figuren 5c und 5d, 6a bis 6d und 10a, 10b ferner zu entnehmen ist, weist der Lenkholm 14 eine elliptische Querschnittsform auf. Es hat sich gezeigt, dass durch die Ausbildung des Lenkholms 14 mit einem elliptischen Querschnitt ein möglicher Seitenversatz des Rads 11 besser kompensierbar ist, so dass ein Versatz des Rads 11 parallel zu der Rotationsebene E ebenfalls wirkungsvoll unterdrückt werden kann. Der elliptische Querschnitt dient dazu, die Biegung des Lenkholms 14 in y-Richtung zu steuern. Durch die Einbaulage, wie es die Figuren 5c und 5d, 6a bis 6d und 10a, 10b zeigen, wird die unterschiedliche Biegesteifigkeit in +45°- und - 45°-Richtung ausgenutzt, um so eine schiefe Biegung zu erzeugen. Diese ist notwendig, um den Versatz in y-Richtung weiter zu minimieren, da die FEM-Analyse gezeigt hat, dass der kreisförmige Lenkholm 14 sich nicht ausschließlich in x-Richtung verformt, sondern auch einen y-Anteil besitzt. Die Biegung in x-Richtung kann zunächst vernachlässigt werden, da diese für den elastokinematischen Ausgleich nicht von Bedeutung ist und später durch eine größere Wandstärke verringert werden könnte. Ebenso kann auch eine andere Querschnittsform mit richtungsabhängiger Biegesteifigkeit gewählt werden, wodurch sich eine schiefe Biegung erzeugen lässt.

Figur 10a zeigt das FEM-Modell der Radaufhängung von oben im unbelasteten Zustand (das Rad wurde zeichnerisch ergänzt). Figur 10b zeigt das belastete Modell mit 10-fach vergrößerter Verformung. Erkennbar ist die geradlinige Verschiebung x der Radachse 12. Ebenfalls deutlich zu sehen ist die Torsion *α* der unteren Gabelbrücke 16, die die Verdrehung im unteren Teil des Lenkholms 14 und in der Schwinge kompensiert. Diese Bewegung der möglichst biegesteifen aber torsionsweichen Gabelbrücke stellt einen wesentlichen Anteil an dem elastokinematischen Ausgleich der ungünstigen Verformungen innerhalb der Radaufhängung dar.

Im Ergebnis resultiert durch die erfindungsgemäße Vorderradaufhängung 1 für ein Motorrad eine Vorderradaufhängung 1, welche eine relativ geringe Masse aufweist und dabei ein sicheres Fahrverhalten ermöglicht.

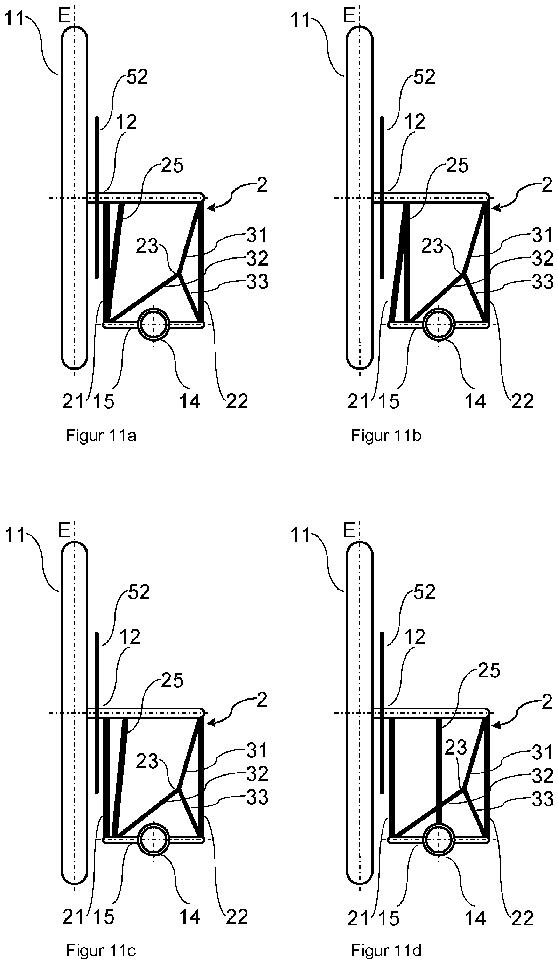

Die Figuren 11a bis 11d zeigen mögliche Ausführungen der Schwinge mit drei Längsholmen, die weitere Möglichkeiten zur Abstimmung des elastokinematischen Ausgleichs bieten. Diese Figuren 11a bis 11d basieren hinsichtlich der verwendeten Komponenten und Referenzzeichen auf den oben beschriebenen Ausgestaltungen mit zwei Längsholmen 21 und 22. Die Ausführungsbeispiele der Figuren 11a bis 11d zeigen jeweils eine Kastenschwinge 2 mit jeweils drei Längsholmen 21, 22 und 25.

In Figur 11a verlaufen die beiden Längsholme 21 und 22 parallel zueinander und quer zu der Drehachse 12 des Rades 11. Der dritte Längsholm 25 verläuft im Bereich des Längsholmes 21 winklig zu diesem. Die beiden Längsholme 21 und 25 bilden einen zu dem Achsträger 12 hin geöffneten spitzen Winkel.

Die Figur 11b entspricht Figur 11a mit dem Unterschied, dass die beiden Längsholme 21 und 25 einen zu dem Achsträger 12 hin geschlossenen spitzen Winkel bilden.

In Figur 11c ist der Abstand zwischen den beiden Längsholmen 21 und 25 vergrößert.

In Figur 11d verläuft der dritte Längsholm 25 mittig zwischen den beiden Längsholmen 21 und 22. Der dritte Längsholm 25 verbindet den Lenkholm 14 mit dem Achsträger 12.

### Bezugszeichenliste

- 1: Radaufhängung, Vorderradaufhängung
- 11: Vorderrad
- 12: Achsträger mit Drehachse
- 13: Einarmschwinge
- 14: Lenkholm
- 15: Lenkholmanbindung
- 16: untere Gabelbrücke
- 17: obere Gabelbrücke
- 2: Fachwerkschwinge
- 21: erster Längsholm
- 22: zweiter Längsholm
- 23: erster Schnittpunkt
- 24: zweiter Schnittpunkt
- 25: dritter Längsholm
- 30: erste Querstrebe
- 31: erste Teilstrebe
- 32: zweite Teilstrebe
- 33: dritte Teilstrebe
- 40: zweite Querstrebe
- 41: erste Teilstrebe
- 42: zweite Teilstrebe
- 43: dritte Teilstrebe
- 44: vierte Teilstrebe
- 5: Bremsanlage
- 51: Bremssattel
- 52: Bremsscheibe
- 53: Stützstrebe zum Lenkholm
- 54: Stützstrebe zur Schwinge
- E: Rotationsebene
- *Fz*: Rad-Aufstandskraft (einschließlich dynamischem Anteil)
- *F_{B}*: Bremskraft
- x: Verschiebung in Längsrichtung
- *y*: Verschiebung in Querrichtung
- *α*: Verdrehung der unteren Gabelbrücke

## Patentansprüche

1. Radaufhängung eines einspurigen Fahrzeugs oder mehrspurigen Fahrzeugs mit einem gelenkten Vorderrad, insbesondere Vorderradaufhängung (1) eines Motorrads oder Trikes,
mit einem um eine Drehachse (12) in einer Rotationsebene (E) rotierbar gelagerten Rad, insbesondere Vorderrad (11), welches mittels einer Einarmschwinge (2) mittelbar oder unmittelbar mit einem drehbar gelagerten Lenkholm (14) verbunden ist,
**dadurch gekennzeichnet,**
**dass** die Einarmschwinge als Fachwerkschwinge (2) ausgebildet ist und mindestens zwei parallel oder schräg zu der Rotationsebene (E) beabstandete Längsholme (21, 22) aufweist, deren erste Enden im Bereich der Drehachse (12) angeordnet und miteinander verbunden sind, und deren zweite Enden im Bereich einer Anbindung der Einarmschwinge (2) an den Lenkholm (14) oder an einen Rahmen des Fahrzeugs angeordnet und miteinander verbunden sind, und die Einarmschwinge (2) wenigstens eine die beiden Längsholme verbindende Querstrebe (30, 40) aufweist.

2. Radaufhängung eines Fahrzeugs nach Anspruch 1,
**dadurch gekennzeichnet,**
**dass** die wenigstens eine Querstrebe (30, 40) im Bereich des ersten Endes mit einem der Längsholme (21, 22) verbunden ist, und im Bereich des zweiten Endes mit dem anderen Längsholm (22, 21) verbunden ist, oder dass die wenigstens eine Querstrebe (30, 40) im Bereich des ersten Endes mit dem Achsträger (12) verbunden ist, und im Bereich des zweiten Endes mit der Lenkholmanbindung (15) verbunden ist.

3. Radaufhängung eines Fahrzeugs nach Anspruch 1 oder 2,
**dadurch gekennzeichnet,**
**dass** die Fachwerkschwinge (2) und/oder der Lenkholm (14) derart ausgebildet ist, bzw. sind, dass eine durch Änderung der Aufstandskräfte und/oder Bremskräfte hervorgerufene Torsion der Drehachse (12) durch eine entgegengerichtete Torsion der Fachwerkschwinge (2) und/oder des Lenkholms (14) im Wesentlichen kompensiert wird.

4. Radaufhängung eines Fahrzeugs nach einem der Ansprüche 1 bis 3,
**dadurch gekennzeichnet,**
**dass** die Fachwerkschwinge (2) und/oder der Lenkholm (14) derart ausgebildet ist, bzw. sind, dass durch eine entgegengerichtete Torsion der Fachwerkschwinge (2) und/oder des Lenkholms (14) in Folge einer von Aufstandskräften und/oder von Bremskräften hervorgerufenen Torsion der Drehachse (12) eine im Wesentlichen lineare Translation der Drehachse (12) innerhalb der Rotationsebene (E) erfolgt, und/oder dass der Lenkholm (14) zumindest abschnittsweise einen Querschnitt mit anisotroper Biegesteifigkeit aufweist, vorzugsweise einen elliptischen Querschnitt aufweist.

5. Radaufhängung eines Fahrzeugs nach einem der vorhergehenden Ansprüche,
**dadurch gekennzeichnet,**
**dass** die wenigstens eine der Querstreben (30, 40) zwischen den beiden Längsholmen (21, 22) außerzentrisch verläuft, und/oder dass die wenigstens eine Querstrebe (30, 40) wenigstens zwei Teilstreben (31, 32, 41, 42, 43) aufweist, von denen mindestens eine Teilstrebe in einem außerzentrisch angeordneten Schnittpunkt (23, 24) miteinander verbunden ist,
wobei vorzugsweise vorgesehen ist,
**dass** die Querstrebe (30, 40) eine dritte Teilstrebe (33, 43) aufweist, die von dem ersten Ende oder dem zweiten Ende eines Längsholms (21, 22) zu dem außerzentrischen Schnittpunkt (23, 24) verläuft und dort mit den anderen Teilstreben (31, 32, 41, 42) der Querstrebe (30, 40) verbunden ist.

6. Radaufhängung eines Fahrzeugs nach Anspruch 5,
**dadurch gekennzeichnet,**
**dass** einer der Schnittpunkte (23, 24) innerhalb einer durch die beiden Längsholme (21, 22) definierten Ebene liegt, und/oder dass mindestens einer der Schnittpunkte (23, 24) oberhalb oder unterhalb einer durch die beiden Längsholme (21, 22) definierten Ebene liegt, und/oder
**dass** wenigstens zwei die beiden Längsholme (21, 22) verbindende Querstreben (30, 40) derart vorgesehen sind, dass die wenigstens zwei Querstreben (30, 40) jeweils zwei sich in einem Schnittpunkt schneidende Teilstreben (31, 32, 41, 42) aufweisen und die beiden Schnittpunkte (23, 24) vertikal zueinander beabstandet sind.

7. Radaufhängung eines Fahrzeugs nach einem der vorhergehenden Ansprüche,
**dadurch gekennzeichnet,**
**dass** die Fachwerkschwinge (2) als eine geschobene Schwinge ausgebildet ist, und/oder
**dass** das Rad (11) ein Bremssystem (5), vorzugsweise mit mindestens einer Bremsscheibe mit einem Bremssattel (51), oder mit einer Bremstrommel aufweist und das Bremssystem über eine separate Stützstrebe (53) an dem Lenkholm (14) abgestützt ist, und/oder dass das Rad (11) eine Felge mit einem Durchmesser von mindestens 14 Zoll oder 15 Zoll aufweist, und/oder
**dass** eine Lenkvorrichtung mit dem drehbar gelagerten Lenkholm (14) mittelbar oder unmittelbar verbunden ist.

8. Radaufhängung eines Fahrzeugs nach einem der vorhergehenden Ansprüche,
**dadurch gekennzeichnet,**
**dass** ein Lenkholm (14) über biegesteife aber torsionsweiche Gabelbrücken (16, 17) mit einem Lenkkopflager verbunden ist, die den seitlichen Abstand des Lenkholms zur Radschwenkachse herstellen, und/oder
**dass** ein Lenkholm (14) kraftschlüssig, formschlüssig oder stoffschlüssig mit der unteren Gabelbrücke (16), und/oder mit einer oberen Gabelbrücke verbunden ist, vorzugsweise, dass der Lenkholm (14) mit der oberen Gabelbrücke verdrehbar verbunden ist.

9. Verfahren zur Herstellung einer Radaufhängung eines einspurigen Fahrzeugs oder mehrspurigen Fahrzeugs mit einem gelenkten Vorderrad, insbesondere Vorderradaufhängung (1) eines Motorrads oder Trikes, umfassend einen Lenkholm (14) und eine Einarmschwinge zur Lagerung einer Drehachse (12) eines Rads (11), insbesondere Vorderrads (11), wobei das Rad (11) um seine Drehachse (12) in einer Rotationsebene (E) rotierbar gelagert ist, und wobei die Einarmschwinge (2) mindestens zwei Längsholme (21, 22) aufweist, die derart untereinander verbunden werden, dass deren erste Enden im Bereich der Drehachse (12) angeordnet und unmittelbar oder mittelbar miteinander verbunden sind, und deren zweite Enden im Bereich einer mittelbaren oder unmittelbaren Anbindung der Einarmschwinge (2) an den Lenkholm (14) angeordnet sind und deren zweite Enden unmittelbar oder mittelbar miteinander verbunden sind, und im Bereich des Lenkholms (14) eine Gabel mit wenigstens einer Gabelbrücke (16, 17) zur Lagerung der Einarmschwinge (2) vorgesehen ist,
**dadurch gekennzeichnet,**
**dass** die Einarmschwinge (2) mit einer definierten Steifigkeit derart ausgebildet wird, dass eine durch Aufstandskräfte und/oder Bremskräfte hervorgerufene Torsion und/oder Biegung der Drehachse (12) durch eine entgegengerichtete Torsion und/oder Biegung der Einarmschwinge (2) und/oder des Lenkholms (14) und/oder der wenigstens einen Gabelbrücke (16, 17) im Wesentlichen kompensiert wird.

10. Verfahren zur Herstellung einer Radaufhängung nach Anspruch 9,
**dadurch gekennzeichnet,**
**dass** die Einarmschwinge als Fachwerkschwinge (2) ausgebildet wird, indem wenigstens eine Querstrebe (30, 40) mit den beiden Längsholmen (21, 22) kraftschlüssig, formschlüssig, vorzugsweise einstückig und/oder stoffschlüssig, verbunden wird.

11. Verfahren zur Herstellung einer Radaufhängung nach Anspruch 9 oder 10,
**dadurch gekennzeichnet,**
**dass** die Steifigkeit der Einarmschwinge (2) derart ausgebildet wird, dass infolge einer durch eine entgegengerichtete Torsion der Fachwerkschwinge (2) und/oder des Lenkholms (14) aufgrund einer von Aufstandskräften und/oder von Bremskräften hervorgerufenen Torsion der Drehachse (12) eine im Wesentlichen lineare Translation der Drehachse (12) innerhalb der Rotationsebene (E) resultiert, und/ dass die Steifigkeit der Gabelbrücken (16, 17) derart ausgebildet wird, dass infolge einer durch eine entgegengerichtete Torsion der unteren Gabelbrücke (16) eine aufgrund einer von Aufstandskräften und/oder von Bremskräften hervorgerufenen Verdrehung des darunter liegenden Teils des Lenkholms (14) und der Schwinge (2) beim Bremsen kompensiert wird.

12. Verfahren zur Herstellung einer Radaufhängung nach einem der Ansprüche 9 bis 11
**dadurch gekennzeichnet,**
**dass** die untere Gabelbrücke (16) derart mit dem Lenkholm (14) verbunden wird, dass eine entgegengerichtete Torsion der unteren Gabelbrücke (16) aufgrund von Aufstandskräften und/oder von Bremskräften auf den daran befestigten Lenkholm (14) übertragen wird.

13. Verfahren zur Herstellung einer Radaufhängung nach einem der Ansprüche 9 bis 12,
**dadurch gekennzeichnet,**
**dass** die Elastizität oder Steifigkeit der Fachwerkschwinge (2) festgelegt wird, indem die beiden Längsholme (21, 22) durch wenigstens eine Querstrebe (30, 40) miteinander derart verbunden werden, dass die wenigstens eine Querstrebe (30, 40) im Bereich ihres ersten Endes mit einem der Längsholme (21, 22) verbunden wird, und mit dem anderen Längsholm (22, 21) im Bereich ihres zweiten Endes verbunden wird, oder dass die wenigstens eine Querstrebe (30, 40) im Bereich des ersten Endes mit dem Achsträger (12) verbunden ist, und im Bereich des zweiten Endes mit der Lenkholmanbindung (15) verbunden ist.

14. Verfahren zur Herstellung einer Radaufhängung nach einem der Ansprüche 9 bis 13,
**dadurch gekennzeichnet,**
**dass** die wenigstens eine Querstrebe (30, 40) zwischen den beiden Längsholmen (21, 22) verläuft, vorzugsweise indem die wenigstens eine Querstrebe (30, 40) wenigstens zwei Teilstreben (31, 32, 41, 42) aufweist, die in einem außerzentrischen Schnittpunkt (23, 24) miteinander verbunden sind.

15. Verfahren zur Herstellung einer Radaufhängung nach einem der Ansprüche 9 bis 14,
**dadurch gekennzeichnet,**
**dass** die Elastizität oder Steifigkeit der Fachwerkschwinge (2) unter Anwendung von Elastokinematik festgelegt oder berechnet wird.
